# EUROPÄISCHE PATENTSCHRIFT

(11) **EP 3 117 062 B1**
(45) Veröffentlichungstag und Bekanntmachung des Hinweises auf die Patenterteilung: **22.08.2018**
(21) Anmeldenummer: 15711078.4
(22) Anmeldetag: 10.03.2015
(51) Int. Cl.: E05F 11/38, E05F 11/48

(54) **VERFAHREN ZUR HERSTELLUNG EINES MITNEHMERS FÜR EINE FENSTERHEBERVORRICHTUNG**
METHOD FOR PRODUCING A CATCH FOR A WINDOW LIFTING DEVICE
PROCÉDÉ SERVANT À FABRIQUER UN ENTRAÎNEUR POUR UN DISPOSITIF RELÈVE-VITRE

(30) Priorität: 10.03.2014 DE 102014204361
(43) Veröffentlichungstag der Anmeldung: 18.01.2017
(73) Patentinhaber: Brose Fahrzeugteile GmbH & Co. Kommanditgesellschaft, Bamberg, 96052 Bamberg (DE)
(72) Erfinder: TAUBMANN, Udo, 96476 Bad Rodach (DE); DALLOS, Christian, 96103 Hallstadt (DE)
(74) Vertreter: Maikowski & Ninnemann Patentanwälte Partnerschaft mbB
(86) Internationale Anmeldenummer: PCT/EP2015/054875
(87) Internationale Veröffentlichungsnummer: WO 2015/135892

(56) Entgegenhaltungen:
- EP-A1- 0 409 095
- EP-A2- 2 505 758
- DE-A1-102010 031 332
- DE-U1- 20 211 131

## Beschreibung

Die vorliegende Erfindung betrifft insbesondere ein Verfahren zur Herstellung eines Mitnehmers nach dem Oberbegriff des Anspruchs 1 und einen Mitnehmer für eine Fensterhebervorrichtung nach dem Oberbegriff des Anspruchs 5. Insbesondere bei Kraftfahrzeug-Fensterhebervorrichtungen ist es bekannt, einen mit der zu verstellenden Scheibe verbundenen Mitnehmer entlang wenigstens einer Führungsschiene der Fensterhebervorrichtung verschieblich zu führen. Der Mitnehmer ist hierbei über ein Zugmittel, beispielsweise einen Seilzug, mit einer Antriebseinrichtung gekoppelt, um eine Antriebskraft zu übertragen und den Mitnehmer entlang der Führungsschiene zu verstellen. Hierdurch wird dann die Scheibe entlang einer vorgegebenen Verstellbahn verschoben, z.B. angehoben oder abgesenkt.
Ein Mitnehmer für eine derartige Fensterhebervorrichtung ist üblicherweise aus einem Kunststoffsmaterial oder aus mehreren Kunststoffmaterialien hergestellt. Dabei ist es bekannt, den Mitnehmer mehrteilig auszuführen, sodass unterschiedliche Bauteile, die für bestimmte Funktionen optimiert sind, separat voneinander hergestellt und miteinander verbunden werden. Beispielsweise ist es bekannt, einen Grundkörper des Mitnehmers, der zur Übertragung einer Antriebskraft mit einem Zugmittel der Fensterhebervorrichtung koppelbar ist, aus einem ersten Material herzustellen, dass eine vergleichsweise hohe Festigkeit aufweist, wie z.B. Polyamid. An diesen Grundkörper wird dann häufig ein Gleitkörper gesteckt, insbesondere geklipst, der aus einem reibungsoptimierten Material, wie z.B. Polyoxymethylen (kurz: POM) hergestellt ist. Über diesen Gleitkörper liegt der Mitnehmer später an der Führungsschiene an, sodass die Materialpaarung zwischen dem Gleitkörper des Mitnehmers und der Führungsschiene dafür entscheidend ist, dass die Reibung, die beim Verschieben des Mitnehmers entlang der Führungsschiene auftritt, möglichst klein ist. Durch die Verwendung eines separaten Gleitkörpers weist der Mitnehmer nur lokal einen reibungsoptimierten Abschnitt auf und es ist nicht notwendig, dass der Mitnehmer vollständig aus dem teureren, reibungsreduzierenden Material hergestellt werden muss.

Um den Montageaufwand zu reduzieren, ist es ferner bekannt, dass der Mitnehmer für eine Fensterhebervorrichtung in einem Mehrkomponenten-Spritzgießverfahren hergestellt wird, um einzelne Körper des Mitnehmers, die für unterschiedliche Funktionen vorgesehen sind, nicht separat voneinander herzustellen und nachträglich aneinander montieren zu müssen. So ist es beispielsweise bekannt, dass an einen Grundkörper eines Mitnehmers eine Weichkomponente, z.B. ein Elastomer, angespritzt wird, um in einem Abschnitt des Mitnehmers gezielt einen dämpfenden Anschlag auszubilden und/oder eine gewisse Elastizität vorzusehen. Die Weichkomponente wird beispielsweise an einem Bereich des Grundkörpers des Mitnehmers angespritzt, mit dem der Mitnehmer an einer feststehenden Komponente anschlägt, um eine unterste oder oberste Verstellposition der Scheiben vorzugeben. Aus der WO 2006/024267 A1 ist ferner bekannt, an einem Führungsbereich eines Mitnehmers, über den der Mitnehmer an einer Führungsschiene gelagert ist, in einem Mehrkomponenten-Spritzgießverfahren einen Stützkörper aus einer Weichkomponente auszubilden, sodass über diesen - gegenüber dem angrenzenden Material elastischeren - Stützkörper leichter die Lage der mit dem Mitnehmer verbundenen Fensterscheibe bezüglich der Führungsschiene angepasst werden kann, um Toleranzen auszugleichen.

Bei den bisher in der Praxis umgesetzten Herstellungsverfahren für einen solchen Mitnehmer werden verschiedene, an ihre jeweilige Funktion hinsichtlich ihrer Geometrie und des verwendeten Materials angepasste Körper in einer klassischen Hart-Weich-Reihenfolge in dem Mehrkomponenten-Spritzgießverfahren gespritzt. Mit anderen Worten wird hier stets zunächst der höher schmelzende Werkstoff, z.B. Polyamid, und anschließend ein niedriger schmelzender Werkstoff, z.B. POM oder eine Weichkomponente, verarbeitet.

So ist beispielsweise auch in der DE 102 07 140 B4 beschrieben, an einen Grundkörper eines Mitnehmers aus einem Material höherer Festigkeit einen Gleitkörper aus einem Material mit guten Gleiteigenschaften zu spritzen.

Analog beschreibt die DE 100 27 877 A1 die Herstellung eines Mitnehmers aus unterschiedlichen Materialien nach der Insert-Technik, wobei an wenigstens ein vorgefertigtes Verbindungselement ein Grundkörper und ein Halter zur Verbindung mit einer Fensterscheibe gespritzt werden, so dass der Halter über das wenigstens eine Verbindungselement relativ zu dem Grundkörper verlagerbar ist.

Die bisher bekannten Herstellungsprozesse können den Nachteil haben, dass die Haftung des niedriger schmelzenden Materials nicht optimal ist und durch sogenannte Durchknüpfungen oder Hintergriffe sichergestellt werden muss, dass die beiden nacheinander gespritzten Körper ausreichend fest miteinander verbunden sind.

Zusätzlich kann sich das Abdichten der verwendeten Spritzgussform schwierig gestalten, da die unterschiedlichen Körper üblicherweise von außen nach innen gefertigt werden. Es wird also z.B. zunächst der Grundkörper aus dem höher schmelzenden Material gespritzt und anschließend in dessen Inneres und/oder in an diesem innen liegenden Bereichen ein Körper aus einem niedriger schmelzenden Material angespritzt. In der Praxis kommt es hierbei trotz Abdichtkanten häufig zu Überspritzungen oder an kritischen Bereichen zu Abschabungen, die das Spritzgießwerkzeug verschmutzen und damit Gratbildungen hervorrufen. Aufgrund von Überspritzungen, die oft glatt sind, kann es im Gebrauch der Fensterhebervorrichtung in Kombination mit der Scheibe zudem zu sogenannten Stick-Slip-Effekten und somit zu unerwünschten Geräuschentwicklungen kommen.

Auch ist es bisher kaum möglich, bei der Verwendung einer Weichkomponente zur Herstellung eines Dämpfungskörpers an einem Grundkörper eines Mitnehmers Material einzusparen. Aufgrund von langen Fließwegen und dem Untergrund, der durch das (Kunststoff-)Material des bereits gespritzten Grundkörpers gebildet wird, ist eine Reduzierung der Wanddicke der Weichkomponente nicht möglich. Es würden zu hohe Einspritzdrücke entstehen, bei denen die Gradbildung deutlich zunimmt. Durch die notwendige Veränderung der Abdichtkanten würde darüber hinaus der Zuhaltekraftbedarf der Spritzgießanlage erhöht, wodurch die Entstehung von Graten wahrscheinlicher wird.

Vor diesem Hintergrund liegt der Erfindung die Aufgabe zugrunde, einen Mitnehmer für eine Fensterhebervorrichtung und ein Verfahren zu dessen Herstellung weiter zu verbessern und die zuvor genannten Nachteile zu überwinden oder zumindest zu verringern.

Diese Aufgabe wird mit einem Verfahren des Anspruchs 1 sowie einem Mitnehmer des Anspruchs 5 gelöst.
Gemäß einem ersten Aspekt der Erfindung wird für die Herstellung eines Mitnehmers, der fertiggestellt wenigstens drei miteinander verbundene Körper aufweist, die aus verschiedenen Materialien mit unterschiedlichen Schmelzpunkten in einem Mehrkomponenten-Spritzgießverfahren hergestellt sind, einen Körper aus einem niedriger schmelzenden Material vor einem Körper aus einem höher schmelzenden Material zu spritzen und einen Körper aus dem höher schmelzenden Material an den Körper aus dem niedriger schmelzenden Material anzuspritzen. Es wird somit eine Art "inverses Spritzgießverfahren" umgesetzt.
Es hat sich überraschend gezeigt, dass bei einem erfindungsgemäßen Herstellungsverfahren, bei dem ein höher schmelzendes Material für einen Körper des Mitnehmers an einen Körper aus einem niedriger schmelzenden Material gespritzt wird, die zuvor genannten Nachteile vermieden werden können. So lässt sich beispielsweise die Haftung einer Weichkomponente an einem Grundkörper des Mitnehmers ohne Zusatzverknüpfungen realisieren und der Mitnehmer auch im Bereich der Weichkomponente im Wesentlichen gratfrei herstellen. Für das Spritzgießwerkzeug sind keine Abdichtkanten notwendig, die eine gewisse Schließkraft benötigen. Auch der Aufbau des Spritzgießwerkzeugs lässt sich einfacher abstimmen, wenn der Grundkörper, der aus einem höher schmelzenden Material gespritzt wird, als Hartkomponente am Ende des Spritzgießverfahrens gespritzt wird und hierdurch nicht in die Kavität der Spritzgussform zum Abdichten eingepasst werden muss.
Vorzugsweise handelt es sich bei allen verwendeten Materialien, die für die Herstellung der einzelnen Körper des einteiligen Mitnehmers verwendet werden, um Kunststoffe. Beispielsweise ist ein Körper aus einem vergleichsweise niedrig schmelzenden Material, wie z.B. einen thermoplastischen Elastomer hergestellt. Ein weiterer Körper kann aus höher schmelzendem Polyoxymethylen (POM) oder aus - vorzugsweise glasfaserverstärktem - Polyamid hergestellt sein, wobei Polyamid gegenüber POM wiederum ein höher schmelzendes Material darstellt. Erfindungsgemäß weist der der Mitnehmer wenigstens
- einen Grundkörper aus einem ersten Material, der zur Übertragung einer Antriebskraft mit einem Zugmittel der Fensterhebervorrichtung koppelbar ist,
- einen Gleitkörper aus einem zweiten Material, der mit der Führungsschienen der Fensterhebervorrichtung in Eingriff bringbar ist, und
- einen Dämpfungskörper aus einem dritten Material, der einen Anschlag an dem Mitnehmer ausbildet bzw. eine Entkopplung zur Fensterscheibe darstellt,
auf und das erste, zweiter und dritte Material haben unterschiedliche Schmelzpunkte. Beispielsweise hat eines der Materialien (z.B. Polyamid) einen Schmelzpunkt oberhalb von 220 °C, z.B. zwischen ca. 210 °C und 265 °C, während die anderen Materialen (z.B. POM und ein thermosplastisches Elastomer), einen Schmelzpunkt von unterhalb 190 °C, z.B. im Bereich zwischen ca. 165°C und 190°C, und unterhalb von 170 °C, z.B. zwischen ca. 80 °C und 170 °C, haben.
Für die Bildung des Dämpfungskörpers, an dem im montierten Zustand der Fensterhebervorrichtung der Mitnehmer an einer feststehenden Komponente anschlägt, wenn das Ende eines vorgegebenen Verstellwegs für die zu verstellende Scheibe erreicht und die Scheibe beispielsweise maximal abgesenkt ist, wird die Verwendung einer Weichkomponente in Form eines thermoplastischen Elastomers bevorzugt. Der Gleitkörper ist aus einem Material mit guten Gleiteigenschaften gefertigt und kann aus POM hergestellt sein. Der Grundkörper kann aus vorzugsweise glasfaserverstärktem Polyamid hergestellt sein. Geeignete Materialien für den Grundkörper sind ferner beispielsweise Polybutylenterephthalat oder Polyoxymethylen.

Grundsätzlich ist der Grundkörper im Vergleich zu dem Material des Gleitkörpers und des Dämpfungskörpers aus einem höher schmelzenden Material hergestellt und wird an den Gleitkörper und den Dämpfungskörper gespritzt. Derart wird zunächst der Dämpfungskörper gespritzt und an diesen nachfolgend der Gleitkörper und an das bereits gespritzte Zwischenprodukt aus Dämpfungs- und Gleitkörper der Grundkörper angespritzt.

Bei einem erfindungsgemäßen Herstellungsverfahren werden somit ein Gleitkörper und ein Dämpfungskörper, die bisher konventionell an den bereits gespritzten Grundkörper als separate Bauteile nachträglich angebracht oder an den Grundkörper angespritzt wurden, in einem Mehrkomponenten-Spritzgießverfahren vor dem Grundkörper gespritzt und erst anschließend der Grundkörper hieran angespritzt. Es hat sich gezeigt, dass auch hierdurch Herstellungsprozess verbessert und der Mitnehmer leichter im Wesentlichen gratfrei hergestellt werden kann. Erfindungsgemäß wird auch hier der Grundkörper aus einem gegenüber dem Material des Gleitkörpers und des Dämpfungskörpers höher schmelzenden Material gefertigt. In einer Ausführungsvariante wird ein Körper aus einem niedriger schmelzenden Material vor einem Körper aus einem höher schmelzenden Material schichtweise gespritzt. So wird beispielsweise in einem ersten Schritt die Weichkomponente in mehreren Schichten, vorzugsweise dünnen Schichten mit einer Dicke ≤ 1,5 mm, gespritzt, bevor in einem zweiten Schritte ein höher schmelzendes Material zur Bildung eines weiteren Körpers des Mitnehmers bevorzugt in derselben Spritzgussform hieran gespritzt wird. In einem Ausführungsbeispiel liegen die Schichtdicken beim Einspritzen des niedriger schmelzenden Materials im Bereich von 0,3 bis 1,0 mm. Bei Bedarf kann eine Schichtdicke aber auch bei über 1,0 mm liegen.
Um ein Verschieben des zuerst zu spritzenden, niedriger schmelzenden Mitnehmerabschnitts bzw. des entsprechenden Körpers während des Einspritzens des höher schmelzenden Materials für einen anderen Körper zu vermeiden, kann der zuerst gespritzte Körper versenkt sein. Der Körper wird folglich in einer Spritzgussform in einer Vertiefung hergestellt, so dass durch das Einspritzen des höher schmelzenden Materials für den weiteren Körper in die Spritzgussform der bereits gespritzte Körper nicht innerhalb der Spritzgussform verschoben wird. Durch die Anordnung in der Vertiefung sind somit keine Angriffsflächen für die nachfolgend einströmende Schmelze vorhanden. Alternativ oder ergänzend können (andere) Mittel in der Spritzgussform und/oder dem Spritzgießwerkzeug vorgesehen sein, um einer Verschiebung des Körpers aus dem niedriger schmelzenden Material innerhalb der Spritzgussform entgegenzuwirken. Zum Beispiel können Erodierrauhigkeiten und/oder Haltestege innerhalb der Spritzgussform vorhanden sein. Im Abdichtbereich der Spritzgussform kann ferner durch einen zurückgesetzten, konischen Auslauf für das zuerst eingespritzte Material mit dem niedriger liegenden Schmelzpunkt ein Dichteffekt und damit eine Gratbildung verhindert werden.
Bei einem Ausführungsbeispiel eines erfindungsgemäßen Herstellungsverfahrens ist ein variabel temperierbares Spritzgießwerkzeug in dem Mehrkomponenten-Spritzgießverfahren eingesetzt, um Schmelzen unterschiedlicher (Kunststoff-)Materialien mit diesem Spritzgießwerkzeug erzeugen und einspritzen zu können. Hierbei kann beispielsweise eine Abkühlphase des Spritzgießwerkzeugs nach der Verarbeitung eines höher schmelzenden Materials zum Verarbeiten und Einspritzen eines niedriger schmelzenden Materials für denselben Mitnehmer genutzt werden.
Ein weiterer Aspekt der vorliegenden Erfindung ist ein Mitnehmer für eine Fensterhebervorrichtung nach dem Anspruch 5, der nach einem erfindungsgemäßen Verfahren hergestellt sein kann und bei dem
- ein Körper, als Abschnitt des Mitnehmers, aus einem niedriger schmelzenden Material vor einem weiteren Körper des Mitnehmers aus einem höher schmelzenden Material gespritzt wurde und der Körper aus dem höher schmelzenden Material an den Körper aus dem niedriger schmelzenden Material gespritzt wurde und
- ein Grundkörper an einen Gleitkörper und einen Dämpfungskörper gespritzt ist.
Zuvor und nachfolgend erläuterte Vorteile von Ausführungsbeispielen für ein erfindungsgemäßes Verfahren gelten somit auch für einen erfindungsgemäßen Mitnehmer und umgekehrt.
Ein derartiger einteiliger, aber mit mehreren Abschnitten oder Körpern aus verschiedenen Materialien ausgeführte Mitnehmer weist folglich ebenfalls einen Grundkörper aus einem ersten Material auf, der zur Übertragung einer Antriebskraft mit einem vorzugsweisen flexiblen Zugmittel der Fensterhebervorrichtung koppelbar ist. Ferner weist der Mitnehmer einen Gleitkörper aus einem zweiten Material auf, der mit der Führungsschiene der Fensterhebervorrichtung in Eingriff bringbar ist, und einen Dämpfungskörper aus einem dritten Material, der einen Anschlag an dem Mitnehmer ausbildet. Aus der nachfolgenden Beschreibung von Ausführungsbeispielen anhand der Figuren werden darüber hinaus weitere Vorteile und Merkmale der Erfindung deutlich werden.
Hierbei zeigen:
- Fig. 1A-1C: in unterschiedlichen Ansichten ein Ausführungsbeispiel für einen erfindungsgemäßen Mitnehmer, der nach einem erfindungsgemäßen Verfahren aus drei unterschiedlichen Materialien gespritzt wurde;
- Fig. 2-5: unterschiedliche mögliche Reihenfolgen bei der Herstellung der verschiedenen Körper des Mitnehmers der Figuren 1A, 1B und 1C, bei denen jeweils wenigstens ein Körper aus einem niedriger schmelzenden Material vor einem Körper aus einem höher schmelzenden Material gespritzt wird;
- Fig. 6: ein fertiggestellter Mitnehmer in perspektivischer Ansicht;
- Fig. 7A: in perspektivischer Ansicht der Mitnehmer der Figur 6 mit Grundkörper und Dämpfungskörper, jedoch ohne Gleitkörper als Zwischenprodukt im Rahmen eines Ausführungsbeispiels eines nicht erfindungsgemäßen Herstellungsverfahrens;
- Fig. 7B: in perspektivischer Ansicht ein Dämpfungskörper und ein Gleitkörper als alternatives Zwischenprodukt im Rahmen eines anderen Ausführungsbeispiels eines erfindungsgemäßen Herstellungsverfahrens;
- Fig. 7C: in perspektivischer Ansicht ein Gleitkörper mit daran angespritztem Grundkörper, jedoch ohne Dämpfungskörper als weiteres alternatives Zwischenprodukt für eine weitere Ausführungsvariante eines nicht erfindungsgemäßen Herstellungsverfahrens;
- Fig. 8A: eine Fensterhebervorrichtung in Seitenansicht mit zwei erfindungsgemäß hergestellten Mitnehmern zur Verstellung einer Fahrzeug-Fensterscheibe;
- Fig. 8B: in vergrößertem Maßstab einen der Mitnehmer der Figur 8A mit der damit verbundenen Fensterscheibe.

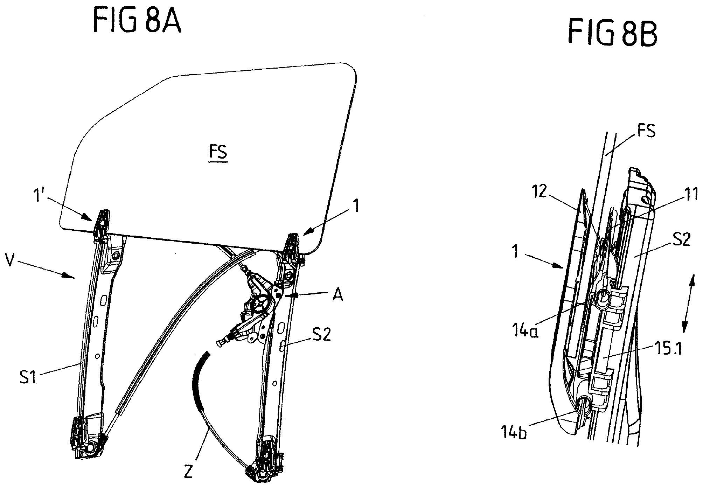

Die Figuren 8A und 8B veranschaulichen zunächst eine Fensterhebervorrichtung V in Form eines doppelsträngigen Kraftfahrzeug-Fensterhebers, mittels dem eine Fensterscheibe FS verstellt und beispielsweise innerhalb einer Fahrzeugtür abgesenkt und angehoben werden kann. Die Fensterscheibe FS ist im Bereich ihrer Scheibenunterkante mit zwei entlang einer Querrichtung zueinander beabstandeten Mitnehmern 1' und 1 verbunden. Diese Mitnehmer 1 und 1' sind jeweils an einer Führungsschiene S1 oder S2 verschieblich gelagert und mit einem Zugmittel in Form eines Bowdenzuges Z verbunden. Der Bowdenzug Z steht ferner mit einem elektromotorischen Antrieb A in Verbindung, so dass bei Betätigung des Antriebs A die beiden Mitnehmer 1 und 1' entlang ihrer vorliegend im Wesentlichen parallel zueinander verlaufenden Führungsschienen S1 und S2 verschoben werden, um die Fensterscheibe FS abzusenken oder anzuheben.
In der Figur 8B ist in vergrößertem Maßstab der eine Mitnehmer 1 gezeigt. Dieser Mitnehmer ist identisch zum dem Mitnehmer 1' der Figur 8A ausgebildet, so dass nachfolgend beschriebene Merkmale des Mitnehmers 1 auch für den Mitnehmer 1' zutreffen.

Der Mitnehmer 1 weist zwei sich gegenüberliegende Schenkel 11 und 12 auf, zwischen denen die Unterkante der Fensterscheibe FS eingeführt ist und zwischen denen ein Abschnitt der Fensterscheibe FS an deren Scheibenunterkante gehalten ist. Damit ist die Fensterscheibe FS an dem Mitnehmer 1 festgelegt und durch Verschieben des Mitnehmers 1 entlang seiner ihm zugeordneten Führungsschiene S2 verstellbar. Für die Verbindung des Bowdenzugs Z mit dem Mitnehmer 1 weist der Mitnehmer 1 an einem Grundkörper 10 zwei Nippelkammern 14a und 14b auf, in denen jeweils ein Seilnippel des Bowdenzuges Z formschlüssig aufgenommen ist, um eine Antriebskraft an den Mitnehmer 1 zu übertragen. Für die verschiebliche Lagerung an der Führungsschiene S2 ist ferner ein Führungsabschnitt 15 vorgesehen, von dem in der Figur 8B lediglich ein Teilbereich 15.1 ersichtlich ist. An diesem Teilbereich 15.1 sind zwei Umgriffslaschen ausgebildet, über die der Mitnehmer 1 mit der Führungsschiene S2 in Eingriff steht und die im bestimmungsgemäß montierten Zustand einen Randabschnitt der Führungsschiene S2 umgreifen, Der Mitnehmer 1 wird über den Führungsabschnitt 15 auf die Führungsschiene S2 aufgeklipst oder an deren Ende aufgeschoben.

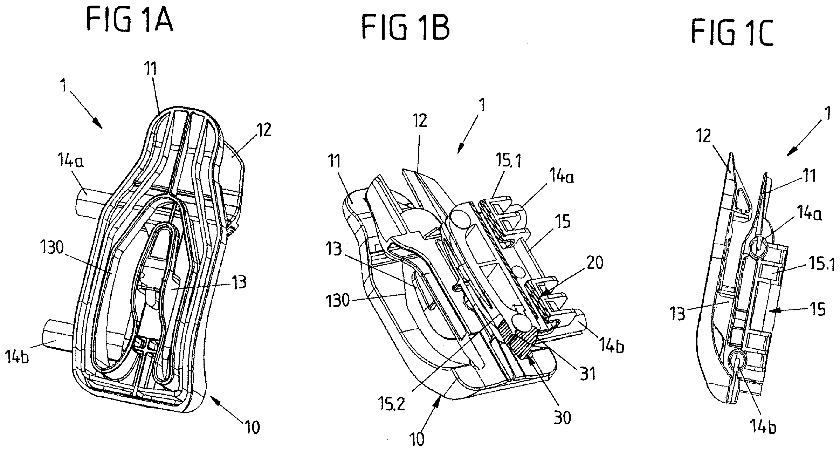

Wie anhand der Einzeldarstellungen des Mitnehmers 1 in den Figuren 1A, 1B und 1C ersichtlich ist, weist der Mitnehmer 1 für die unterschiedlichen von ihm zu erfüllenden Funktionen unterschiedliche Abschnitte oder Körper 10, 20 und 30 auf, die aus verschiedenen Materialien hergestellt sind.

An einem Grundkörper 10 aus einem vergleichsweise starren Material, zum Beispiel glasfaserverstärktem Polyamid, sind die beiden Schenkel 11, 12, ein Auflageabschnitt 13, an dem die Unterkante der Fensterscheibe FS aufliegen soll, die beiden Nippelkammern 14a und 14b sowie der Führungsabschnitt 15 ausgebildet. An dem Grundkörper 10 greift folglich direkt der Bowdenzug Z an, um eine Antriebskraft an den Mitnehmer 1 zu übertragen. Zur Materialeinsparung und um eine gewisse Flexibilität zum Toleranzausgleich bereitzustellen, ist an dem einen Schenkel 11 des Grundkörpers 10 eine Aussparung in Form eines Freischnitts 130 ausgebildet, in die sich der Auflageabschnitt 13 für die Scheibenunterkante zungenförmig erstreckt.

Um den Mitnehmer 1 möglichst reibungsarm an der Führungsschiene S2 entlang verschieben zu können, ist ein Gleitkörper 20 aus einem hierfür optimierten Material, zum Beispiel POM ausgebildet. Dieser Gleitkörper 20 ist mit dem Führungsabschnitt 15 des Grundkörpers 10 verbunden und ist so ausgeführt, dass der Mitnehmer 1 nur über den Gleitkörper 20 an der Führungsschiene S2 anliegt. Der Gleitkörper 20 bildet dabei die Innenwandungen einer zwischen zwei Teilbereichen 15.1 und 15.2 des Führungsabschnitts 15 ausgebildeten Führung, in der ein Abschnitt der Führungsschiene S2 formschlüssig aufgenommen ist. Während an dem einen Teilbereich 15.1 des Führungsabschnitts 15 die L-förmigen und mit dem Gleitkörper 20 versehenen Umgriffslaschen ausgebildet sind, sind an dem anderen Teilbereich 15.2, an dem entlang auch das Seil des Bowdenzuges Z geführt ist, Teile eines Dämpfungskörpers 30 des Mitnehmers 1 ausgebildet.

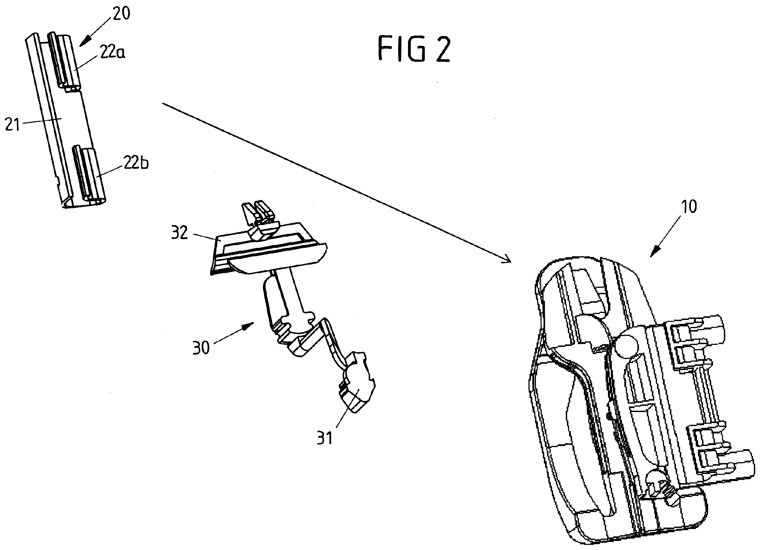

Der Dämpfungskörper 30 besteht vorliegend aus einer Weichkomponente, zum Beispiel einem thermoplastischen Elastomer, und damit aus einem zu dem Material des Grundkörpers 10 und dem Material des Gleitkörpers 20 verschiedenen (dritten) Material. Über den Dämpfungskörper 30 soll einerseits eine möglichst weiche und elastische Abstützung der Fensterscheibe FS innerhalb des Mitnehmers 1 - an einem Stützabschnitt 32 des Dämpfungskörpers 30 (vgl. z.B. die Figuren 2 bis 5) - ermöglicht werden. Darüber hinaus bildet ein Anschlagabschnitt 31 des Dämpfungskörpers 3, der an dem Teilbereich 15.2 nach unten vorsteht, den Abschnitt des Mitnehmers 1 aus, der am Ende eines vorgegebenen Verstellwegs für die Fensterscheibe FS an einer feststehenden Fahrzeugkomponente anschlägt. Über den Dämpfungskörper 30 und insbesondere seinem Anschlagabschnitt 31 soll somit das Stoppen des Mitnehmers 1 am Ende eines Verstellwegs der Fensterscheibe FS gedämpft werden, insbesondere um Beschädigungen und unerwünschte Geräuschentwicklungen zu vermeiden.

Der Mitnehmer 1 mit seinen unterschiedlichen Körpern 10, 20 und 30, die aus verschiedenen Materialen mit unterschiedlichen Schmelzpunkten bestehen, ist einteilig ausgeführt, besteht also nicht aus separat voneinander und nachträglich aneinander montierten Bauteilen. Die einzelnen Körper 10, 20 und 30 sind vielmehr in einem Mehrkomponenten-Spritzgießverfahren hergestellt, an deren Ende die einzelnen Körper 10, 20 und 30 untrennbare, integrierte Abschnitte des einteiligen Mitnehmers 1 bilden.

Um hierbei den Materialeinsatz zu reduzieren und die Präzision bei der Herstellung des Mitnehmers 1 zu verbessern, wird zunächst wenigstens einer der drei Körper 10, 20 und 30 des Mitnehmers 1, der aus einem Material mit einem gegenüber einem anderen Körper 30, 20 oder 10 niedriger schmelzenden Material besteht, gespritzt und anschließend wenigstens ein Körper aus einem höher schmelzenden Material an diesen Körper angespritzt. Es wird folglich zunächst ein Körper aus einem Material mit einem niedrigeren Schmelzpunkt in dem Spritzgießverfahren hergestellt und anschließend in einem der weiteren Herstellungsschritte das einen höheren Schmelzpunkt aufweisende Material zugeführt, um einen weiteren Körper des Mitnehmers 1 auszubilden. Hierdurch kann beispielsweise erreicht werden, dass das zuvor eingespritzte Material nochmals zumindest lokal aufgeschmolzen wird und sich somit besser mit dem nachfolgend eingespritzten Material verbindet. Zudem hat sich gezeigt, dass insbesondere das niedriger schmelzende Material in besonders dünnen Schichten hergestellt werden kann und sich leicht die Bildung von Graten vermeiden lassen, da das niedriger schmelzende Material in dem höher schmelzenden und nachträglich eingespritzten Material eingebettet ist.
Mit den Figuren 2, 3, 4 und 5 sind unterschiedliche Ausführungsvarianten für die Herstellung eines Mitnehmers 1 veranschaulicht, bei denen jeweils mindestens Körper aus einem höher schmelzenden Material an einen bereits zuvor gespritzten Körper aus einem niedriger schmelzenden Material angespritzt wird.

Bei der nicht erfindungsgemäßen Ausführungsvariante der Figur 2 wird beispielsweise zunächst der Gleitkörper 20 aus POM in einer Spritzgussform gespritzt. Der längserstreckt ausgebildete Gleitkörper 20 weist hierbei eine Basis 21 auf, an der zwei Gleitführungsbereiche 22a und 22b L-, C- oder S-förmig vorstehen. An diesen Gleitführungsbereichen 22a und 22b, die nach der Fertigstellung des Mitnehmers 1 die Innenseiten der Umgriffslaschen des Teilbereichs 15.2 bilden, wird die Führungsschiene S2 später von dem Mitnehmer 1 umgriffen. Die Basis 21 und die Gleitführungsbereiche 22a und 22b sind somit bei dem fertiggestellten Mitnehmer 1 zwischen den Teilbereichen 15.1 und 15.2 innerhalb des Führungsabschnitts 15 eingebettet. Im Anschluss an den Gleitkörper 20 wird bei dem in der Figur 2 skizzierten Verfahren der Dämpfungskörper 30 gespritzt, der aus einem gegenüber dem Material des Gleitkörpers 20 aus einem noch niedriger schmelzenden Material, z.B. einem thermoplastischen Elastomer, besteht. Der Dämpfungskörper 30 weist neben dem bereits zuvor erläuterten Anschlagabschnitt 31 einen Stützabschnitt 32 auf, der im Bereich des einen Schenkels 12 für eine elastische Abstützung der Scheibe FS sorgen soll. An das aus bereits gespritztem Gleitkörper 20 und dem Dämpfungskörper 30 bestehende Zwischenprodukt wird dann im Anschluss der Grundkörper 10 aus dem höher schmelzenden, vorzugsweise glasfaserverstärkten Polyamid angespritzt, sodass sowohl der Gleitkörper 20 als auch der Dämpfungskörper 30 in den Grundkörper 10 eingebettet sind.

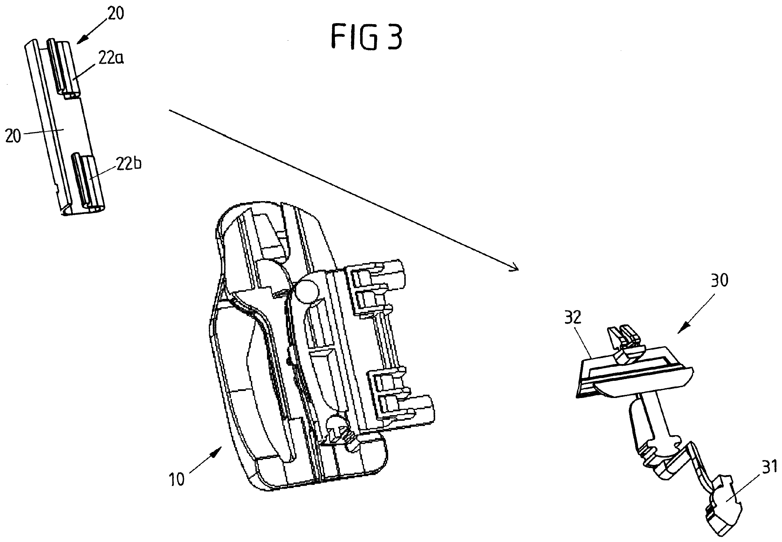

Bei der nicht erfindungsgemäßen Ausführungsvariante der Figur 3 wird zunächst der Gleitkörper 20 gespritzt. An diesen wird anschließend der Grundkörper 10 aus dem höher schmelzenden und vorzugsweise glasfaserverstärkten Polyamid angespritzt. Nachfolgend wird der Dämpfungskörper 30 an den Grundkörper 10 mit dem darin bereits eingebetteten Gleitkörper 20 angespritzt.

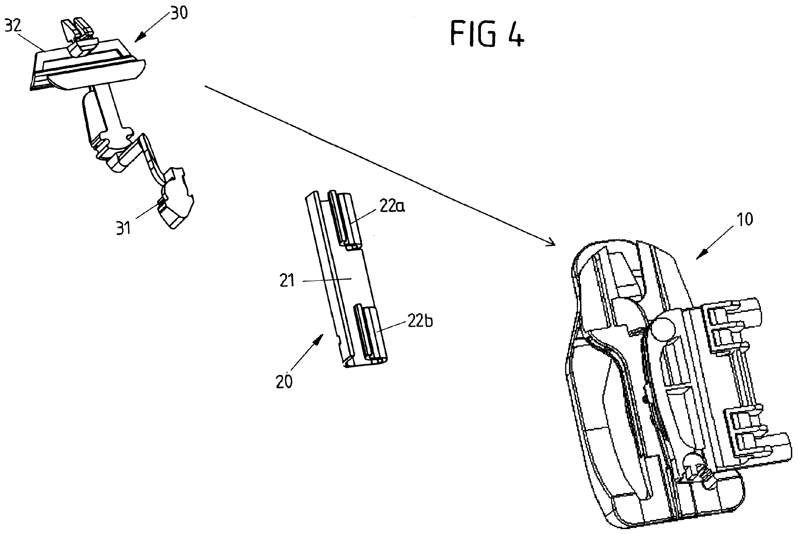

Bei der erfindungsgemäßen Ausführungsvariante der Figur 4 werden sukzessive höher schmelzende Materialien verarbeitet. So wird zunächst der Dämpfungskörper 30 aus dem Material gespritzt, das im Vergleich zu den anderen Körpern 10 und 20 den niedrigsten Schmelzpunkt aufweist. Nachfolgend wird der Gleitkörper 20 gespritzt, der aus einem Material besteht, dessen Schmelzpunkt niedriger ist als der Schmelzpunkt des Materials für den Grundkörper 10. Im Anschluss wird der Grundkörper 10 in eine Spritzgussform ein- und an den Dämpfungskörper 30 und den Gleitkörper 20 angespritzt. Abschließend werden hier also der Dämpfungskörper 30 und der Gleitkörper 20 von dem höher schmelzenden Material des Grundkörpers 10 umspritzt.

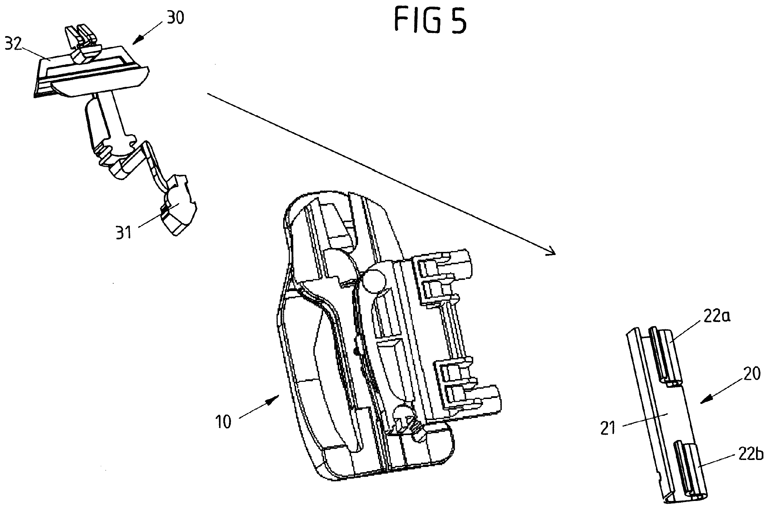

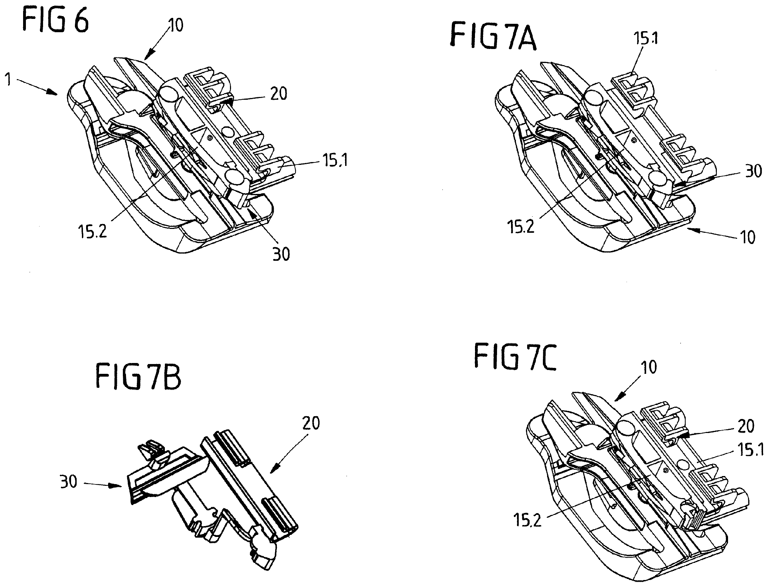

Bei der nicht erfindungsgemäßen Ausführungsvariante der Figur 5 wird wiederum zunächst der Dämpfungskörper 30 aus der relativ teuren Weichkomponente gespritzt und anschließend der Grundkörper 10 aus dem höher schmelzenden Material hieran angespritzt. Derart ist der Dämpfungskörper 30 bereits innerhalb des Grundkörpers 10 eingebettet und ist der Grundkörper 10 an den relevanten Stellen mit der Weichkomponente des Dämpfungskörper 30 beschichtet, bevor an den Führungsabschnitt 15 des Grundkörpers 10 der Gleitkörper 20 angespritzt wird.
Während in der Figur 6 nochmals in perspektivischer Ansicht der fertiggestellte Mitnehmer 1 mit Grundkörper 10, Gleitkörper 20 und Dämpfungskörper 30 dargestellt ist, zeigen die Figuren 7A, 7B und 7C ebenfalls in perspektivischer Ansicht unterschiedliche Zwischenprodukte bei der Herstellung des Mitnehmers 1 in Abhängigkeit von dem durchgeführten Ausführungsbeispiel eines erfindungsgemäßen Herstellungsverfahrens.
In der Figur 7A ist entsprechend dem in der Figur 5 skizzierten Herstellungsverfahren der Dämpfungskörper 30 mit dem hieran angespritzten Grundkörper 10 dargestellt. In der Figur 7B wiederum sind der bereits gespritzte Dämpfungskörper 30 und der bereits gespritzte Gleitkörper 20 dargestellt, bevor hieran entsprechend dem in der Figur 2 oder in der Figur 4 skizzierten Verfahren der Grundkörper 10 angespritzt wird. In der Figur 7C ist wiederum entsprechend dem in der Figur 3 skizzierten Ausführungsbeispiel der Grundkörper 10 bereits an dem Gleitkörper 20 angespritzt. Hier fehlt lediglich noch das Anspritzen einer Weichkomponente an die entsprechenden Bereiche des Grundkörpers 10 und damit der Dämpfungskörper 30.

Grundsätzlich kann während der Herstellung ein zunächst gespritzter Körper aus einem niedriger schmelzenden Material, z.B. der Dämpfungskörper 30 oder der Gleitkörper 20, in einer Vertiefung innerhalb einer Spritzgussform ausgespritzt werden, sodass es bei dem nachfolgenden Einspritzen der Schmelze des höher schmelzenden Materials, z.B. für den Grundkörper 10, zu keinem Verschieben des zuvor gespritzten Körpers 20 oder 30 kommt.
Selbstverständlich ist es möglich, dass im Rahmen eines erfindungsgemäßen Herstellungsverfahrens der Mitnehmer 1 in unterschiedlichen Stationen einer Spritzgießanlage verarbeitet wird, um die verschiedenen Materialschmelzen zu verarbeiten. Beispielsweise wird ein in den Figuren 7A, 7B oder 7C gezeigtes Zwischenprodukt in einer ersten Station hergestellt und in einer zweiten Station der jeweilige dritte Körper 20, 10 oder 30 angespritzt.

### Bezugszeichenliste

- 1: Mitnehmer
- 10: Grundkörper
- 11, 12: Schenkel
- 13: Auflageabschnitt
- 130: Aussparung
- 14a, 14b: Nippelkammer
- 15: Führungsabschnitt
- 15.1, 15.2: Teilbereich
- 20: Gleitkörper
- 21: Basis
- 22a, 22b: Gleitführungsbereich
- 30: Dämpfungskörper
- 31: Anschlagabschnitt
- 32: Stützabschnitt
- A: Antrieb
- FS: Fensterscheibe
- S1, S2: Führungsschiene
- V: Fensterhebervorrichtung
- Z: Bowdenzug (Zugmittel)

## Patentansprüche

1. Verfahren zur Herstellung eines Mitnehmers (1) für eine Fensterhebervorrichtung (V), bei der eine Verstellung einer Scheibe (FS) mittels eines Zugmittels (Z) erfolgt und der Mitnehmer (1) entlang einer Führungsschiene (S2) der Fensterhebervorrichtung (V) verschieblich und mit dem Zugmittel (Z) verbunden ist, wobei der fertiggestellte Mitnehmer (1) wenigstens drei miteinander verbundene Körper (10, 20, 30) aufweist, die aus verschiedenen Materialien hergestellt sind, und der Mitnehmer (1) mit den wenigstens drei Körpern (10, 20, 30) in einem Mehrkomponenten-Spritzgießverfahren hergestellt wird, wobei der Mitnehmer (1) wenigstens
- einen Grundkörper (10) aus einem ersten Material, der zur Übertragung einer Antriebskraft mit dem Zugmittel (Z) koppelbar ist, sowie
- einen Gleitkörper (20) aus einem zweiten Material, der mit der Führungsschiene (S2) in Eingriff bringbar ist, und
- einen Dämpfungskörper (30) aus einem dritten Material, der einen Anschlag an dem Mitnehmer (1) ausbildet,
aufweist,
**dadurch gekennzeichnet, dass**
zur Herstellung des Mitnehmers (1) in dem Mehrkomponenten-Spritzgießverfahren zunächst der Gleitkörper (20) und der Dämpfungskörper (30) gespritzt werden, bevor der Grundkörper (10) an den Gleitkörper (20) und den Dämpfungskörper (30) gespritzt wird, wobei der Gleitkörper (20) im Vergleich zu dem Material des Dämpfungskörpers (30) aus einem höher schmelzenden Material hergestellt ist und an den Dämpfungskörper (30) gespritzt wird und der Grundkörper (10) im Vergleich zu dem Material des Gleitkörpers (20) und des Dämpfungskörpers (30) aus einem höher schmelzenden Material hergestellt ist.

2. Verfahren nach Anspruch 1, **dadurch gekennzeichnet, dass** ein Körper (30, 20) aus einem niedriger schmelzenden Material vor einem Körper (20, 10) aus höher schmelzenden Material schichtweise gespritzt wird.

3. Verfahren nach Anspruch 1 oder 2, **dadurch gekennzeichnet, dass** ein Körper (30, 20) aus einem niedriger schmelzenden Material in einer Spritzgussform in einer Vertiefung hergestellt wird, so dass durch das Einspritzen des höher schmelzenden Materials für den weiteren Körper (20, 10) in die Spritzgussform der bereits gespritzte Körper (30, 20) nicht innerhalb der Spritzgussform verschoben wird.

4. Verfahren nach einem der vorhergehenden Ansprüche, **dadurch gekennzeichnet, dass** in dem Mehrkomponenten-Spritzgießverfahren ein variabel temperierbares Spritzgießwerkzeug eingesetzt wird, um Schmelzen unterschiedlicher Materialien in diesem Spritzgießwerkzeug erzeugen und einspritzen zu können.

5. Mitnehmer für eine Fensterhebervorrichtung (V), bei der eine Verstellung einer Scheibe (FS) mittels eines Zugmittels (Z) erfolgt und der Mitnehmer (1) entlang einer Führungsschiene (S2) der Fensterhebervorrichtung (V) verschieblich und mit dem Zugmittel (Z) verbunden ist, wobei der Mitnehmer (1) wenigstens drei miteinander verbundene Körper (10, 20, 30) aufweist, die aus verschiedenen Materialien mit unterschiedlichen Schmelzpunkten hergestellt sind, und der Mitnehmer (1) mit den wenigstens drei Körpern (10, 20, 30) in einem Mehrkomponenten-Spritzgießverfahren hergestellt ist, wobei der Mitnehmer (1) wenigstens das Folgende aufweist:
- einen Grundkörper (10) aus einem ersten Material, der zur Übertragung einer Antriebskraft mit dem Zugmittel (Z) koppelbar ist,
- einen Gleitkörper (20) aus einem zweiten Material, der mit der Führungsschiene (S2) in Eingriff bringbar ist, und
- einen Dämpfungskörper (30) aus einem dritten Material, der einen Anschlag an dem Mitnehmer (1) ausbildet,
wobei das erste, zweite und dritte Material unterschiedliche Schmelzpunkte haben, und der Mitnehmer (1) mit den wenigstens drei Körpern - dem Grundkörper (10), dem Gleitkörper (20) und dem Dämpfungskörper (30) - in einem Mehrkomponenten-Spritzgießverfahren hergestellt wurde,
**dadurch gekennzeichnet, dass**
bei dem Mitnehmer (1) der Gleitkörper (20) aus einem im Vergleich zu dem Material des Dämpfungskörpers (30) höher schmelzenden Material hergestellt und an den Dämpfungskörper (30) gespritzt ist und anschließend der Grundkörper (10) aus einem im Vergleich zu dem Material des Gleitkörpers (20) und des Dämpfungskörpers (30) höher schmelzenden Material hergestellt und an den Gleitkörper (20) und den Dämpfungskörper (30) gespritzt ist.

## Claims

1. A method for producing a carrier element (1) for a window lifting device (V) in which an adjustment of a glass (FS) is performed by means of a traction means (Z), the carrier element (1) being displaceable along a guide rail (S2) of the window lifting device (V) and being connected to the traction means (Z), wherein the completed carrier element (1) has at least three interconnected bodies (10, 20, 30) which are produced from dissimilar materials, and the carrier element (1) having the at least three bodies (10, 20, 30) is produced by a multicomponent injection-molding method, wherein the carrier element (1) has at least
- a main body (10) from a first material, said main body (10) for transmitting a driving force being coupleable to the traction means (Z); and
- a sliding body (20) from a second material, said sliding body (20) being engageable with the guide rail (S2); and
- a damper body (30) from a third material, said damper body (30) configuring a stop on the carrier element (1),
**characterized in that**
for producing the carrier element (1) by the multicomponent injection-molding method, the sliding body (20) and the damper body (30) are initially molded before the main body (10) is molded to the sliding body (20) and to the damper body (30), wherein the sliding body (20) in comparison with the material of the damper body (30) is produced from a material that melts at a higher temperature and is molded to the damper body (30) and the main body (10) in comparison with the material of the sliding body (20) and of the damper body (30) is produced from a material melting at a higher temperature.

2. The method as claimed in claim 1, **characterized in that** a body (30, 20) from a material melting at a lower temperature is molded in layers before a body (20, 10) from a material melting at a higher temperature.

3. The method as claimed in claim 1 or 2, **characterized in that** a body (30, 20) from a material melting at a lower temperature is produced in a depression in an injection-molding die such that by injecting the material melting at a higher temperature for the further body (20, 10) into the injection-molding die the already molded body (30, 20) is not displaced within the injection-molding die.

4. The method as claimed in one of the preceding claims, **characterized in that** an injection-molding tool which is capable of variable temperature control is employed in the multicomponent injection-molding method, so as to be able to generate melts of dissimilar materials in this injection-molding tool and to be able to inject said melts.

5. A carrier element for a window lifting device (V), in which an adjustment of a glass (FS) is performed by means of a traction means (Z), the carrier element (1) being displaceable along a guide rail (S2) of the window lifting device (V) and being connected to the traction means (Z), wherein the carrier element (1) has at least three interconnected bodies (10, 20, 30) which are produced from dissimilar materials having dissimilar melting points, and the carrier element (1) having the at least three bodies (10, 20, 30) is produced by a multicomponent injection-molding method, wherein the carrier element (1) has at least the following:
- a main body (10) from a first material, said main body (10) for transmitting a driving force being coupleable to the traction means (Z),
- a sliding body (20) from a second material, said sliding body (20) being engageable with the guide rail (S2), and
- a damper body (30) from a third material, said damper body (30) configuring a stop on the carrier element (1),
wherein the first, second, and third materials have dissimilar melting points, and the carrier element (1) having the at least three bodies - the main body (10), the sliding body (20), and the damper body (30) - was produced by a multicomponent injection-molding method,
**characterized in that**
in the case of the carrier element (1) the sliding body (20) in comparison with the material of the damper body (30) is produced from a material that melts at a higher temperature and is molded to the damper body (30) and subsequently the main body (10) in comparison with the material of the sliding body (20) and of the damper body (30) is produced from a material melting at a higher temperature and is molded to the sliding body (20) and to the damper body (30).

## Revendications

1. Procédé servant à fabriquer un entraîneur (1) pour un dispositif lève-vitre (V), dans lequel un déplacement d'une vitre (FS) est effectué au moyen d'un moyen de traction (Z) et l'entraîneur (1) peut coulisser le long d'un rail de guidage (S2) du dispositif lève-vitre (V) et est relié au moyen de traction (Z), dans lequel l'entraîneur (1) fin prêt présente au moins trois corps (10, 20, 30) reliés les uns aux autres, qui sont fabriqués à partir de différents matériaux, et l'entraîneur (1) est fabriqué avec les au moins trois corps (10, 20, 30) lors d'un procédé de moulage par injection à composants multiples, dans lequel l'entraîneur (1) présente au moins
- un corps de base (10) composé d'un premier matériau, qui peut être couplé au moyen de traction (Z) afin de transmettre une force d'entraînement, ainsi que
- un corps glissant (20) composé d'un deuxième matériau, qui peut être amené en prise avec le rail de guidage (S2), et
- un corps d'amortissement (30) composé d'un troisième matériau, qui forme une butée au niveau de l'entraîneur (1),
**caractérisé en ce que**
aux fins de la fabrication de l'entraîneur (1) lors du procédé de moulage par injection à composants multiples, le corps glissant (20) et le corps d'amortissement (30) sont injectés dans un premier temps avant que le corps de base (10) ne soit injecté au niveau du corps glissant (20) et du corps d'amortissement (30), dans lequel le corps glissant (20) est fabriqué, en comparaison avec le matériau du corps d'amortissement (30), à partir d'un matériau à point de fusion plus élevé et est injecté au niveau du corps d'amortissement (30) et le corps de base (10) est fabriqué, en comparaison avec le matériau du corps glissant (20) et du corps d'amortissement (30), à partir d'un matériau à point de fusion plus élevé.

2. Procédé selon la revendication 1, **caractérisé en ce qu'**un corps (30, 20) composé d'un matériau à point de fusion plus bas est injecté par couches devant un corps (20, 10) composé d'un matériau à point de fusion plus élevé.

3. Procédé selon la revendication 1 ou 2, **caractérisé en ce qu'**un corps (30, 20) composé d'un matériau à point de fusion plus bas est fabriqué dans un moule de moulage par injection dans un renfoncement de sorte que du fait de l'injection du matériau à point de fusion plus élevé pour l'autre corps (20, 10) dans le moule de moulage par injection, le corps (30, 20) déjà injecté n'est pas coulissé à l'intérieur du moule de moulage par injection.

4. Procédé selon l'une quelconque des revendications précédentes, **caractérisé en ce qu'**un outil de moulage par injection à régulation thermique variable est utilisé lors du procédé de moulage par injection à composants multiples afin de pouvoir produire et injecter des matières fondues de différents matériaux dans ledit outil de moulage par injection.

5. Entraîneur pour un dispositif lève-vitre (V), dans lequel un déplacement d'une vitre (FS) est effectué au moyen d'un moyen de traction (Z) et l'entraîneur (1) peut coulisser le long d'un rail de guidage (S2) du dispositif lève-vitre (V) et est relié au moyen de traction (Z), dans lequel l'entraîneur (1) présente au moins trois corps (10, 20, 30) reliés les uns aux autres, qui sont fabriqués à partir de différents matériaux présentant des points de fusion différents, et l'entraîneur (1) est fabriqué avec les au moins trois corps (10, 20, 30) lors d'un procédé de moulage par injection à composants multiples, dans lequel l'entraîneur (1) présente au moins ce qui suit :
- un corps de base (10) composé d'un premier matériau, qui peut être couplé au moyen de traction (Z) aux fins de la transmission d'une force d'entraînement,
- un corps glissant (20) composé d'un deuxième matériau, qui peut être amené en prise avec le rail de guidage (S2), et
- un corps d'amortissement (30) composé d'un troisième matériau, qui forme une butée au niveau de l'entraîneur (1),
dans lequel le premier, le deuxième et le troisième matériau ont des points de fusion différents et l'entraîneur (1) a été fabriqué avec les au moins trois corps - le corps de base (10), le corps glissant (20) et le corps d'amortissement (30) - lors d'un procédé de moulage par injection à composants multiples,
**caractérisé en ce que**
dans le cas de l'entraîneur (1), le corps glissant (20) est fabriqué à partir d'un matériau présentant un point de fusion plus élevé en comparaison avec le matériau du corps d'amortissement (30) et est injecté au niveau du corps d'amortissement (30), et immédiatement après le corps de base (10) est fabriqué à partir d'un matériau présentant un point de fusion plus élevé en comparaison avec le matériau du corps glissant (20) et du corps d'amortissement (30) et est injecté au niveau du corps glissant (20) et du corps d'amortissement (30).
